(19) Europäisches Patentamt
European Patent Office
Office européen des brevets

(11) **EP 2 948 500 B1**

(12) **EUROPÄISCHE PATENTSCHRIFT**

(45) Veröffentlichungstag und Bekanntmachung des Hinweises auf die Patenterteilung:
**31.05.2017** **Patentblatt 2017/22**

(21) Anmeldenummer: **14703027.4**

(22) Anmeldetag: **23.01.2014**

(51) Int Cl.:
*C08J 7/04* (2006.01)    *A43B 13/18* (2006.01)
*A47C 7/02* (2006.01)    *A47C 7/14* (2006.01)
*A61G 7/057* (2006.01)    *B68G 7/05* (2006.01)
*B68G 7/06* (2006.01)

(86) Internationale Anmeldenummer:
**PCT/EP2014/000165**

(87) Internationale Veröffentlichungsnummer:
**WO 2014/114453 (31.07.2014 Gazette 2014/31)**

(54) **KISSENARTIGER FORMKÖRPER UND DESSEN VERWENDUNG**

CUSHION-LIKE SHAPED BODY AND USE THEREOF

CORPS MOULÉ EN FORME DE COUSSIN ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2013   DE 102013001169**

(43) Veröffentlichungstag der Anmeldung:
**02.12.2015   Patentblatt 2015/49**

(73) Patentinhaber: **TechnoGel GmbH**
**37115 Duderstadt (DE)**

(72) Erfinder:
• **AUSMEIER, Matthias**
**37520 Osterode am Harz (DE)**
• **DREYLING, Hans, Hermann**
**37115 Duderstadt (DE)**
• **KLINGEBIEL, Jan**
**37115 Duderstadt (DE)**
• **KLINGEBIEL, Frank, Stefan**
**37115 Duderstadt (DE)**

(74) Vertreter: **Lins, Martina et al**
**Gramm, Lins & Partner**
**Patent- und Rechtsanwälte PartGmbB**
**Theodor-Heuss-Strasse 1**
**38122 Braunschweig (DE)**

(56) Entgegenhaltungen:
**EP-B1- 0 396 230        DE-A1-102007 057 091**
**DE-U1-202010 016 838    US-A1- 2007 221 227**
**US-A1- 2007 246 157     US-A1- 2009 320 297**
**US-A1- 2012 090 197**

**Beschreibung**

Die Erfindung betrifft einen kissenartigen Formkörper, der eine elastische Füllung, vorzugsweise ein Gel, in einer Umhüllung umfasst, sowie die Verwendung des Formkörpers u. a. für Polster, Griffe, Sättel, Kissen, Dichtungen und Schwingungsdämpfer, auch innerhalb komplexerer Bauteile und Artikel, in die das Kissen integriert, an die es angeformt oder mit denen es verbunden ist.

Gelkissen sind als Dichtungen oder Polster lange bekannt. Sie dienen beispielsweise bei Fahrradsätteln, Kissen und Sitzen zur gleichmäßigen Lastverteilung oder werden in Atemmasken medizinischer oder industrieller Art im Dicht- und Polsterbereich, der an das Gesicht des Benutzers angrenzt, eingesetzt.

Diese Dichtungen und Polster sollen weich, elastisch und anschmiegsam sein. Meist ist gewünscht, dass sie nach einer Druckbelastung bei Gebrauch in ihre Ursprungsform zurückkehren, um ihre Funktion beim nächsten Gebrauch wieder in gleicher Weise ausüben zu können.

Für Polster- und Dichtmaterialien, die beim Benutzer ein angenehmes, weichgepolstertes Gefühl erzeugen sollen und gleichzeitig durch eine gewisse Elastizität und Rückstellkraft eine gute bleibende Dichtwirkung ergeben, haben sich elastische und gelförmige Materialien als sehr gut geeignet herausgestellt. In großem Maße kommen Silikone und Polyurethane zum Einsatz.

Das Gebrauchsmuster DE 202 17 653 U1 offenbart einen Gelkörper aus einem weichen Silikongel, das von einer Silikon- oder PU-Folien-Außenhaut umgeben und über ein härteres Zwischenteil mit einem Trägerteil verbunden ist.

Die EP 0 396 230 B1 offenbart eine mit Silikongel gefüllte Brustprothese mit einer Umhüllung aus einem Silikon-Elastomer, welches durch eine innere Beschichtung mit einem Polyurethan fester und undurchlässiger gemacht wird. Das sehr weiche, quasi flüssige Silikongel wird so vor dem Auslaufen sicher geschützt.

Die US 2012/090197 A1 offenbart eine Einlegesohle für Radrennschuhe, die ein als Einlegestück ausgebildetes Polster besitzt. Das Polster ist beschichtet oder umhüllt. Für Polstermaterial und Hülle sind verschiedene Materialien, wie Polyethylen, EVA, Polyurethan und für die Beschichtung u.a. Polyolefine, Polystyrole, PVC, Latex, TPE einschließlich Silikon, Teflon oder EVA vorgesehen.

Die US 2009/320297 A1 beschreibt einen Rasierer mit einem nachgiebigen Einsatz. Der Einsatz besteht aus einer Haut aus SEBS oder Silikon und einem Füllmaterial bzw. Polstermaterial in Form von Silikongel, Polyurethangel oder SEBS-Gel.

Das deutsche Gebrauchsmuster DE 20 2010 016 838 U1 offenbart ein Polsterelement zur lösbaren Befestigung an einer Lagerungsfläche. Dieses flache, kissenartige Polsterelement ist mit Hilfe eines im Wesentlichen schichtförmigen Befestigungselements an einer starren plattenförmigen Liegefläche eines medizinischen Untersuchungsstuhls oder Operationstisches befestigt. Das Befestigungselement besteht aus wenigstens einer Schicht aus einem Polyurethangel, das in trockenem Zustand adhäsiv ist und das Polsterelement auf der Lagerungsfläche "anklebt".

Die US 2007/0221227 A1 offenbart ein Dichtungselement für den Kontakt zwischen einer Atemmaske und dem benutzenden Patienten. Diese im Allgemeinen ringförmige Dichtung umfasst eine elastische Ummantelung, die mit einer sehr weichen Gelsubstanz mit einem Cone-Penetration-Wert von 5-200 Penetrations (gemessen mit einem Drucksondierungstest) charakterisiert wird. Dabei ist die elastische Umhüllung formgebend für das Dichtungselement, sodass die Gelsubstanz flüssiger und weicher als übliche polsternde Gelsubstanzen gewählt werden kann. Das Gel ist vorzugsweise ein superweiches Silikongel oder ein sehr weiches Polyurethangel. Die formgebende Hülle ist vorzugsweise aus einem thermoplastischen Elastomer (TPE) und insbesondere aus einem Silikonflüssigkautschuk ("Liquid Injection Molded (LIM) silicone rubber").

Die DE 696 34 431 T2 beschreibt unter anderem eine Gesichtsdichtung für eine Atemmaske mit einem ringförmigen Dichtungsteil aus einem viskoelastischen Polyurethanpolymer mit einer dem menschlichen Fettgewebe ähnlichen Elastizität und einer Abdeckung des ansonsten klebrigen Polymers durch eine gegebenenfalls tief gezogene oder durch Sprühen oder Tauchen aufgebrachte Urethanfolie. Diese Deckfolie wird mit 0,05 bis 0,25 mm sehr dünn gehalten, um die elastischen Eigenschaften des ringförmigen Dichtungskörpers nicht zu verändern.

Elastische Polyurethane bieten für den Verwendungszweck sehr gut einstellbare mechanische Eigenschaften. Eine inhärente Klebrigkeit macht häufig eine Abdeckfolie erforderlich, wie vorstehend beschrieben. Die Folie soll dünn und reißfest sein, bei der Anwendung jedoch nicht stören. Dieses Problem ist im Stand der Technik noch nicht vollständig gelöst. Es gibt viele Polyurethanmassen, deren elastisches und in sich sehr formbewegliches Verhalten von der sie umgebenden Folie nicht nachvollzogen werden kann.

Die oben genannte Polyurethandeckfolie ist als dünne Sprühfolie in der Lage, sich bei Druckbelastung jeder Bewegung des viskoelastischen Polyurethans anzupassen, dies gilt jedoch nicht für Zugbelastungen. Die Folie kann dabei reißen. Hinlänglich weiche PVC-Folien enthalten zu viel Weichmacher mit den damit verbundenen Nachteilen. Mit Silikonen, die auch als Trennmittel eingesetzt werden, sind Polyurethane in der Regel inkompatibel, so dass sich an der Grenzschicht Ablösungen ergeben können.

Die Aufgabe der Erfindung besteht darin, einen weichen, formstabilen Gelkörper, der beispielsweise als Polster oder Dichtung verwendbar ist und aus einer umhüllten Füllung besteht, einheitlich weich und formstabil auszubilden, wobei diese Eigenschaften auch bei Zug-, Quetsch- oder Torsionsbelastungen gegeben sein sollen.

Die Aufgabe wird mit den Merkmalen des kissenartigen Formkörpers nach Anspruch 1, der Verwendung nach Anspruch 10 und den Bauteilen oder Artikeln nach Anspruch 11 gelöst.

Der erfindungsgemäße kissenartige Formkörper umfasst eine elastische, gelartige Füllung in einer Umhüllung und ist dadurch gekennzeichnet, dass die Füllung aus einem Polyurethan mit einer Shore-(000)-Härte, die kleiner oder gleich 80 ist, und einem Druckverformungsrest kleiner gleich 14 % (DIN EN ISO 1856:2008-01) besteht und dass die Umhüllung ganz oder teilweise aus weichem Silikon mit einer Schichtdicke von 0,075 mm bis 1 mm und mit einer Shore-(A)-Härte zwischen 3A und 45A besteht, wobei das Polyurethan der Füllung (2) adhäsiv ist und das weiche Silikon eine vollflächig in unmittelbarem Kontakt zur Füllung (2) stehende Hüllschicht (3) bildet und der Verbund aus Füllung (2) und Hüllschicht (3) bei Zugdehnung bis zu 250 % längs der Kontaktfläche bei Raumtemperatur ohne bleibende Dehnung in die Ursprungsform zurückkehrt.

Der Formkörper stellt sich als Einheit aus Füllung und Umhüllung dar. Die Umhüllung besteht ganz oder teilweise aus einer dünnen Hüllschicht aus weichem Silikon, die in der Lage ist, jede Bewegung der Füllung mitzumachen und umgekehrt. Die Hüllschicht ist dadurch optisch und haptisch kaum wahrnehmbar. Das Kissen verhält sich wie ein einheitlicher Körper. Auch nach Stauchen oder Dehnung bilden sich keine Risse, Blasen, Wellenmuster, Falten, Ablösungserscheinungen oder andere dauerhafte Schäden. Auf diese Weise bildet der Formkörper, soweit die Füllung von der dünnen Silikon-Hüllschicht umgeben ist, einen weichen, elastischen, dehn- und komprimierbaren jedoch auch formstabilen Körper, der sehr einheitlich wirkt und in den verschiedensten Formgebungen ausgebildet sein kann.

Vorzugsweise werden mehr als 5 %, weiter vorzugsweise mehr als 10 % und insbesondere mehr als 20 % der Umhüllung bezogen auf die Kontaktfläche zur Füllung von der Hüllschicht aus Silikon gebildet. Ein geringer Umhüllungsgrad mit der weichen Silikon-Hüllschicht kann beispielsweise bei Formausgleichskissen gegeben sein. Die Füllung befindet sich beispielsweise in einem Spalt zwischen zwei Körpern und die Hüllschicht deckt die Füllung nach außen vollständig ab und komplettiert die Umhüllung der elastischen Füllung bzw. Gelfüllung, d.h. hier der Ausgleichsmasse.

In bestimmten Ausführungsformen können Teile der Umhüllung durch starre Elemente gebildet werden, an die der kissenförmige Formkörper angeformt ist. Wiederum komplettiert die dünne, weiche Silikon-Hüllschicht die Umhüllung der elastischen Füllung.

Der Formkörper kann beispielsweise eine Kissenform besitzen und als Kissen, als Pad oder Polster verwendbar sein, z.B. für orthopädische Artikel, wie Prothesen oder Orthesen, um dort für die verschiedensten Polsterfunktionen eingesetzt zu werden. Der Formkörper kann auch in fast jeder beliebigen anderen äußeren Form, unter anderem als Griff, beispielsweise für Sportgeräte oder medizinische Geräte, einschließlich Fahrradlenkergriffen, Hantelgriffbereichen, usw., ausgebildet sein und er kann für Sitzpolster, Armauflagen, Kopfstützen, Sättel, lose Kissen aller Art, Lordosepolster, für medizinische Ports, für Erotikartikel, für Dichtungen, beispielsweise auch an medizinischen Artikeln oder Sanitärartikeln, z.B. Dichtungen für Notfallatemmasken, Narkosemasken oder Intubationsvorrichtungen, und schließlich auch als Schwingungsdämpfer für Maschinen und insbesondere Kraftfahrzeuge eingesetzt werden.

Mit dem kissenartigen Formkörper nach der Erfindung können verschiedenste Bauteile oder Artikel, zum Beispiel medizinische oder orthopädische Artikel oder Sanitätsartikel, wie oben schon beschrieben, ausgestattet werden. Die erfindungsgemäßen Formkörper können dabei mit komplexeren Bauteilen oder Artikeln zusammengesetzt sein, wofür sie beispielsweise in eine Aussparung des Bauteils oder Artikels eingepasst sein können. Alternativ oder zusätzlich können an dem erfindungsgemäßen Formkörper Befestigungs- und Halteelemente angeordnet sein, d.h. befestigt, insbesondere angeformt und speziell angespritzt sein. Teile der Umhüllung des Formkörpers können in besonderen Ausführungsformen als Bauteilelemente bzw. Befestigungs- oder Halteelemente ausgebildet sein. Die Umhüllung kann auch einstückig mit anderen Teilen des Bauteils oder Artikels ausgebildet sein. Die Hüllschicht kann mit Beuteilelementen, z.B. Hartkunststoffsegmenten, ein Volumen für die Füllung bilden.

Zur Lösung der Aufgabe ist unter anderem unerlässlich, dass die Hülle eine sehr hohe Dehnbarkeit und Reißfestigkeit bei gleichzeitiger hoher Weichheit besitzt. Untersuchungen der Erfinder haben ergeben, dass dies mit vorgefertigten, tiefgezogenen Folien praktisch nicht zu erreichen ist. Durch die Folienverarbeitung wird die Hülle gegebenenfalls orientiert oder gestreckt, was die Folie zwar reißfest, jedoch weniger anpassungsfähig macht.

Für die Erfindung ist Folgendes wesentlich:

- Die Hülle ist hochdehnbar, der Reißdehnungswert beträgt vorzugsweise wenigstens 400 %, weiter vorzugsweise wenigstens 500 %;

- die Dehnfähigkeit des Polyurethans ist immer größer oder gleich der Dehnfähigkeit der Silikonhaut. Hierdurch macht das Polyurethan jede Bewegung der Silikonhaut mit, es kommt nicht zu Ablösungen; der Polyurethankörper wird bei Dehnung mechanisch nicht geschädigt oder verändert;

- gleichzeitig entwickelt die Hülle bei Längsdehnung relativ hohe Rückstellkräfte, sie ist also nicht nur weich, sondern hochelastisch und unterstützt die Füllung in ihrem eigenen elastischen Rückstellvermögen, was dazu führt, dass der gesamte Formkörper sich wie aus einem Material gegossen verhält. Um dies zu erreichen, besitzt die Silikonschicht der Hülle einen Spannungswert bei 250 % Dehnung von mindestens 0,5 N/mm$^2$;

- das Polyurethan ist ein vorzugsweise untervernetztes Polyadditionsprodukt aus Isocyanat und isocyanatreaktiver Komponente. Die isocyanatreaktive Komponente liegt im Überschuss vor und verleiht dem Material eine gewisse innere Beweglichkeit neben der durch die Vernetzung gegebenen Formstabilität und Elastizität. Die "innere Beweglichkeit" kann durch das Gleiten von Molekülbereichen oder Polymerdomänen relativ zueinander oder durch die relative Beweglichkeit einer nicht-stationären Gelphase gegenüber einer stationären Gelphase bewirkt werden und verleiht dem Polyurethan einen Gelcharakter. Das erfindungsgemäß verwendete Polyurethan, das die Kissenfüllung bildet, besitzt eine Shore-(000)-Härte von nicht mehr als 80, vorzugsweise nicht mehr als 50, weiter vorzugsweise nicht mehr als 25. Das Polyurethan-Füllmaterial ist adhäsiv. Überraschenderweise wurde gefunden, dass sich der erfindungsgemäße Formkörper vollkommen homogen verhält. Das Vorhandensein der Hülle tritt visuell von außen nicht in Erscheinung. Es findet keine Verschiebung an der Grenzfläche zwischen Hülle und Füllmaterial statt. Auch bei großer mechanischer Belastung entstehen an dieser Grenzfläche keine Blasen oder sonstige Unregelmäßigkeiten. Durch den weichen Silikonkautschuk fühlt sich das gesamte Kissen weich und haptisch angenehm an. Dabei ist das Kissen so weich, dass übliche Kugeltests, wie sie bei Schaumstoff durchgeführt werden, nicht zu sinnvollen Testergebnissen führen. Das Gesamtkissen ist sehr elastisch, d.h., es geht schnell in seine ursprüngliche Form zurück. Die Silikonhaut ist sehr stark reversibel dehnbar und nimmt die Füllung in jeder Phase der mechanischen Belastung mit. Bei Zugdehnung des kissenartigen Formkörpers bis zu 250 % bei Raumtemperatur kehrt das Kissen nach Ende der Belastung ohne bleibende Dehnung in seine Ursprungsform zurück. Diese hervorragenden Eigenschaften gelten auch für Biegen und Verwinden des Kissens. In jedem Fall wird die Ursprungsform nach Belastungsende schnell wiederhergestellt.

Überraschenderweise ist die Haftung zwischen Silikonhülle und Polyurethanfüllungsmaterial außerordentlich gut, obwohl diese Materialien üblicherweise wenig verträglich sind. Dies wird nach derzeitigen Erkenntnissen auf die große Weichheit beider Materialien und das praktisch kongruente Dehnverhalten zurückgeführt.

Gemäß einem Aspekt der Erfindung ist das weiche Silikon der Hüllschicht ein Silikonflüssigkautschuk (LSR - Liquid Silicon Rubber).

In Fortbildung der Erfindung ist die Schichtdicke der Silikonhülle 0,1 bis 0,9 mm und vorzugsweise 0,1 bis 0,4 mm. Bei einem Silikonmaterial der beschriebenen Weichheit und Reißfestigkeit sowie Dehnbarkeit reichen diese Schichtdicken aus, um den gewünschten erfindungsgemäßen Effekt zu erzielen.

Die Shore-(A)-Härte der Silikonhülle liegt vorzugsweise zwischen Shore 5A und 40A, weiter vorzugsweise 10A und 40A und weiter vorzugsweise zwischen Shore 20A und Shore 40A. Die etwas höhere Shore-(A)-Härte wird bei dünneren Schichtdicken verwendet, während dickere Schichtdicken mit weicheren Silikonflüssigkautschuken ausgeführt werden können.

Die Hüllschicht wird vorzugsweise aus einem Silikonflüssigkautschuk (LSR = Liquid Silicone Rubber) hergestellt, da dieses spritzgussfähig und daher besonders geeignet ist, um dünnwandige Hüllen zu erstellen. Andere Silikonmassen z. B. RTV-Silikone (RTV = Raum-Temperatur-vernetzend) sind aufgrund ihrer niedrigen Viskosität und ihrer Weichheit ebenfalls geeignet, um dünnwandige Silikonhüllen für den erfindungsgemäßen Formkörper zu fertigen.

Das Polyurethan ist vorzugsweise ein solches mit einem Isocyanat-Index kleiner gleich 80, vorzugsweise kleiner gleich 60. In bevorzugter Ausführungsform liegt die isocyanatreaktive Komponente im Überschuss vor und kann sich als disperse Gelphase verhalten. Der Gelcharakter des bevorzugten Polyurethangels kommt also dadurch zustande, dass mit niedrigen Kennzahlen (Isocyanatindex) gearbeitet wird.

Das Polyurethangel besteht vorzugsweise aus Reaktionsprodukten von Polyetherpolyolen und Polyisocyanaten. Das mathematische Produkt der Polyolfunktionalität und der Isocyanatfunktionalität beträgt vorzugsweise mindestens 5,2, weiter vorzugsweise mindestens 6,5, sehr vorzugsweise mindestens 7,5. Dabei liegt die Isocyanatfunktionalität vorzugsweise zwischen 2 und 4.

Insbesondere hat sich herausgestellt, dass Polyetherpolyole mit Funktionalitäten, die größer als 3 sind und OH-Zahlen haben, die kleiner als 60 sind, in Kombination mit Isocyanaten, deren Funktionalität größer als 3 ist, haptisch besonders angenehme Gele ergeben.

Es können aliphatische, cykloaliphatische und aromatische Isocyanate eingesetzt werden, die mindestens difunktionell sein sollten. Der Einsatz von Kettenverlängerern, Vernetzern und Polyolen mit OH-Zahlen größer 60 ist möglich und kann zur Eigenschaftsmodifikation des resultierenden Gels, wie in anderen Anwendungen der Polyurethanindustrie üblich, genutzt werden.

Die erfindungsgemäß eingesetzten Polyurethane sind nicht chemisch geschäumt und besitzen eine Dichte größer gleich 500 Gramm pro Liter und weiter vorzugsweise kleiner gleich 1200 Gramm pro Liter. Geringe Mengen Gas bzw. Luft können in das Polyurethanmaterial eingebracht, z. B. eingeschlagen werden ("physikalisches Schäumen"), wobei jedoch die vorgenannten Dichtegrenzen eingehalten werden sollten.

Bei dem erfindungsgemäßen Kissen wirken die dünne Silikonhüllschicht und die Füllung zusammen, wobei die Dimensionen des Kissens in der Regel so sind, dass die Kissenfüllung in den meisten Bereichen wenigstens 3 mm dick ist. Dies bedeutet, dass die Füllung, die mechanisch von einiger Bedeutung ist, nicht zu dünn ausgebildet sein soll. Der größte oder breiteste Querschnitt in beliebige Richtung sollte daher wenigstens 3 mm, vorzugsweise wenigstens 5 mm, betragen.

In einigen bevorzugten Ausführungsformen wird die Umhüllung praktisch vollständig aus der Hüllschicht aus dünnem Silikon gebildet, wobei die Hüllschicht eine optional mit einem anderen Material als dem weichen Silikon verschlossene Öffnung besitzen kann. Die Öffnung kann mit einer Versiegelung, vorzugsweise aus dem Material der Silikonhüllschicht, oder einem Verschluss verschlossen sein.

Die Öffnung mit dem Verschluss oder Verguss ist in erster Linie erforderlich, wenn die Hüllschicht zuerst gebildet wird, beispielsweise gegossen oder in eine Form gesprüht, und dann mit der Füllung gefüllt wird. Anstelle des Verschlusses kann auch ein Bauteil-Element verwendet werden, an das die Füllung und die Hüllschicht dann angeformt sind. Hüllschicht und Stopfen, bzw. Verschluss oder Bauteilelement bilden die vollständige Umhüllung für die Füllung.

Gemäß einem weiteren Aspekt kann die Öffnung der Umhüllung offen gelassen werden, wenn beispielsweise die Klebrigkeit oder Haftungsfähigkeit der Füllung für eine Haftverbindung an einem Bauteil oder einer Person genutzt werden soll.

Wie beschrieben kann die Füllung in den kissenförmigen Formkörper durch eine Öffnung eingebracht werden. Die Öffnung der Umhüllung oder speziell der Hüllschicht wird nach dem Befüllen vorzugsweise versiegelt und beispielsweise mit einem Silikonverguss verschlossen, bevorzugt mit dem Silikonmaterial der Hüllschicht, aber alternativ auch mit einem harten Silikon, das einen Deckel oder Pfropfen bildet. Allgemein kann ein Verschluss oder Deckel bzw. Pfropfen für die Öffnung aus einem beliebigen Material, beispielsweise einem härteren Kunststoff, bestehen. Es kann sich um eine Verschlussplatte handeln.

Grundsätzlich kann das Kissen auf verschiedene Arten gefertigt werden:

Gemäß einer ersten Ausführungsform wird das Polyurethangel, in einem Zustand vor dem vollständigen Auspolymerisieren, in eine vorgefertigte Silikonhülle eingefüllt. Hierbei kann das Polyurethangel durch Sprühen, Gießen, Streichen oder sonstige Techniken verarbeitet werden. Das Füllen einer separat vorgefertigten Silikonhülle mit Polyurethangel ist hierbei ebenso möglich, wie das Füllen einer zeitlich unmittelbar, beispielsweise in einem 2-Komponenten-Verfahren, vorgefertigten Silikonhülle. Die zu füllende Silikonhülle wird durch Sprühen, Gießen, Streichen oder sonstige Techniken vorgefertigt, bevorzugt jedoch im Spritzgießverfahren. Die Einfüllöffnung der mit Polyurethangel gefüllten Silikonhülle kann bei Bedarf nach dem Auspolymerisieren des Polyurethangels versiegelt werden. Die Versiegelung erfolgt vorzugsweise mit einem Silikon, das durch Sprühen, Gießen, Streichen oder sonstige Techniken auf die Einfüllöffnung aufgebracht wird. Die Haftung von Silikonhülle, Polyurethangel und Versiegelungsschicht kann durch den Einsatz eines Haftmittels verstärkt werden.

Gemäß einem weiteren Ausführungsbeispiel wird das Polyurethangel mittels einer formgebenden Vorrichtung vorgefertigt. Der vorgefertigte Polyurethan-Gelkörper wird nach dem Auspolymerisieren mit einer Silikonhülle ummantelt. Die Silikonhülle kann den Polyurethan-Gelkörper zum Teil oder vollständig umschließen. Der Polyurethan-Gelkörper kann unmittelbar nach dem Auspolymerisieren oder zeitlich davon getrennt mit einer Silikonhülle ummantelt werden. Die Haftung von Silikonhülle, Polyurethangel und Silikonversiegelungsschicht kann durch den Einsatz eines Haftmittels verstärkt werden.

Die Aufgabe der Erfindung wird schließlich auch gelöst durch die Verwendung des erfindungsgemäßen kissenartigen Formkörpers für Polster, Formausgleichselemente, Griffe, Sättel, Kissen, Erotikartikel, Dichtungen, Matratzen und Schwingungsdämpfer. Zur Erfindung gehören daher entsprechende Bauteile oder Artikel, die mit einem kissenartigen Formkörper nach der Erfindung ausgestattet sind.

Nachfolgend wird die Erfindung anhand von Ausführungsbeispielen und Materialtests näher erläutert, die rein illustrativen Zwecken dienen sollen. Die in der vorausgegangenen Beschreibung allgemein beschriebene Erfindung wird durch die Beispiele nicht beschränkt. Vielmehr dienen sie dem Fachmann zur Anschauung für weitere Ausführungsmöglichkeiten im Rahmen der Erfindung.

In den Zeichnungen zeigen:

Figur 1          Kraft-Weg-Diagramm für Dehnungs-Prüfkörper 3003/05, Muster 1

Figur 2          Kraft-Weg-Diagramm für Dehnungs-Prüfkörper 3003/10, Muster 2

Figur 3          Kraft-Weg-Diagramm für Dehnungs-Prüfkörper 3003/40, Muster 3

Figuren 4 - 17          schematische Schnittdarstellungen und Ansichten verschiedener Ausführungsformen nämlich:

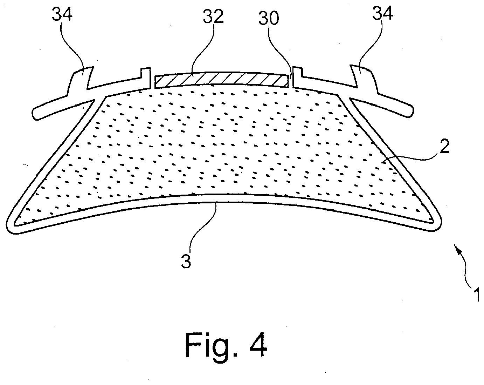

Figur 4          Stirnpolster einer Maske, Querschnitt

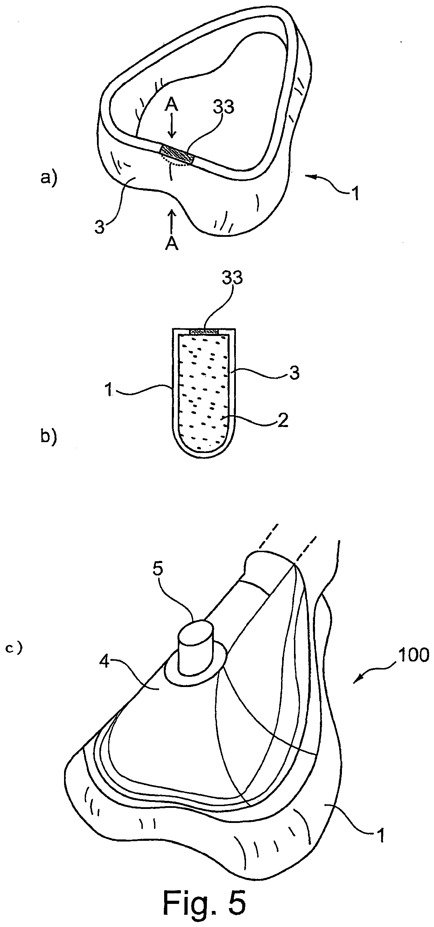

Figur 5          Unfall-, Narkose- oder allgemein Atemmaske,

a) perspektivisch, b) Querschnitt bei A-A,
c) perspektivische Ansicht mit Maskenoberteil

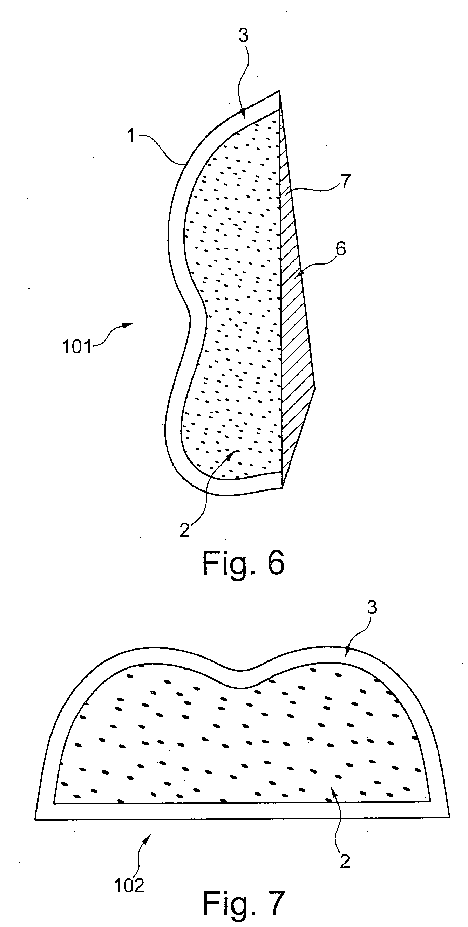

Figur 6            Lordosepolster

Figur 7            Kopfkissen mit Nackenstütze

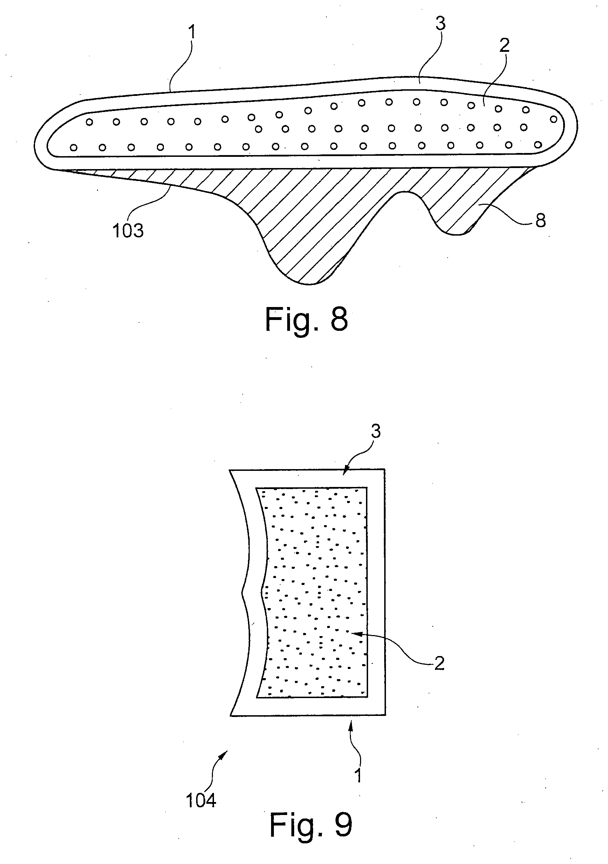

Figur 8            Fahrradsattel

Figur 9            Kopfstütze

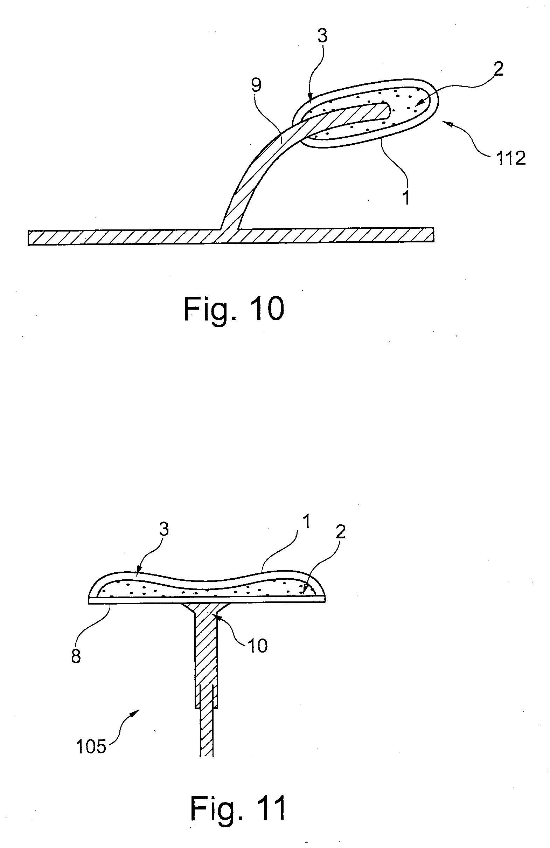

Figur 10           Griff

Figur 11           Armauflage

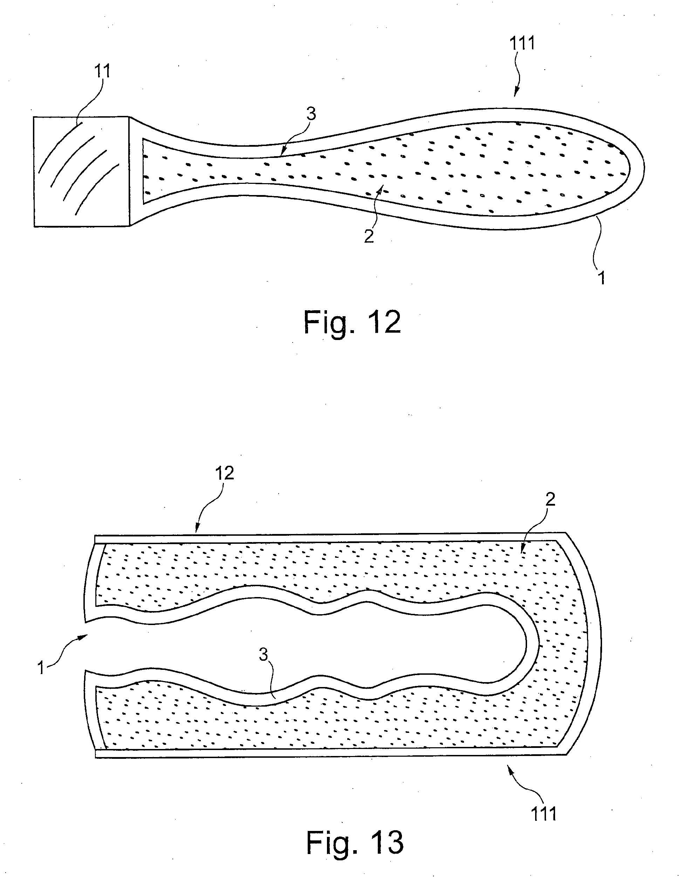

Figuren 12 und 13    Erotikartikel

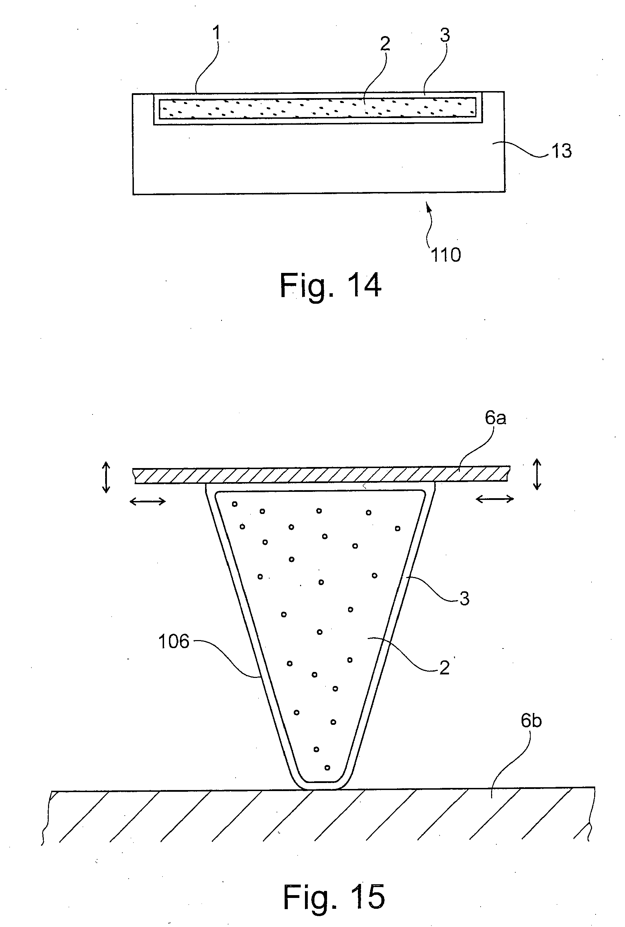

Figur 14           Matratze

Figur 15           Schwingungsdämpfer

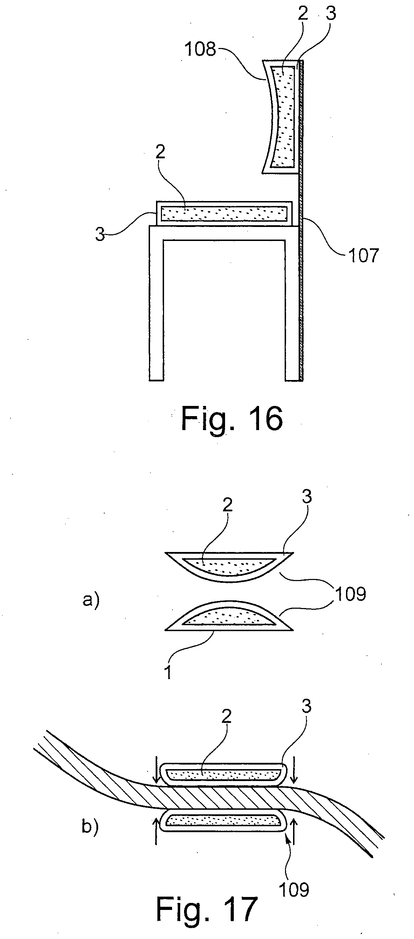

Figur 16           Stuhlpolsterung

Figur 17           Dichtung, a) im unbelasteten Zustand,

                          b) im dichtenden Zustand.

## Tests an Prüfkörpern

Herstellen der Prüfkörper für die Dehnungsversuche:

Auf eine planare Fläche wird eine erste Silikonfolie gelegt, auf die ein Rahmen mit den Innenmaßen 100 mm Länge, 50 mm Breite und 10 mm Höhe aufgesetzt wird. Dieser Rahmen wird mit Polyurethangel befüllt. Auf das Gel wird eine zweite Silikonfolie abgerollt. Die Silikonfolie 2 wird mit einem planaren Deckel beschwert. Nach dem Auspolymerisieren des Gels wird der Rahmen entfernt und die überstehende Silikonfolie besäumt. Es entstehen quaderförmige Prüfmuster mit den Maßen 100 x 50 x (10,4 bis 10,6) mm. Die Dicke der Silikonfolien 1 und 2 betrug 0,25 ± 0,05 mm.

Es wurden insgesamt drei Prüfkörper nach dem vorstehend beschriebenen Verfahren hergestellt.

Bei den Dehnungsprüfkörpern eingesetztes Silikonmaterial:

Verwendet wurden Silikonfolien aus ELASTOSIL® der WACKER Chemie AG in drei verschiedenen Shore-(A)-Härten.

- ELASTOSIL® 3003/05; Shore A 5 E-Modul 0,12 N/mm$^2$ - Herstellerangabe

- ELASTOSIL® 3003/10; Shore A 10 E-Modul 0,13 N/mm$^2$ - Herstellerangabe

- ELASTOSIL® 3003/40; Shore A 40 E-Modul 0,20 N/mm$^2$ - Herstellerangabe

Die Silikonfolien hatten jeweils eine Dicke von ca. 0,25 mm.

Bei den Dehnungsprüfkörpern eingesetztes Gel:

Polyadditionsprodukt aus einem trifunktionellen Polyetherpolyol mit einer OH-Zahl von 30, mit einer Viskosität von 1000 mPas und einem tetrafunktionellen HDI-Prepolymer mit einem NCO-Gehalt von 6 Gew.%, mit einer Viskosität von 3000 mPas.

Die resultierende Shore-(000)-Härte des Gels betrug 8.

Die Bestimmung der Shore-Härte ist in ASTM D2240-05(2010) beschrieben. Geräte und Verfahren sind weiterhin auch in DIN ISO 868:2003E angegeben.

Mit den vorgenannten Materialien hergestellte Dehnungsprüfkörper:

Nr. 1     Kombination aus Gel und Silikonfolien aus ELASTOSIL® 3003/05 nachfolgend genannt "Prüfkörper-Dehnung 3003/05"

Nr. 2     Kombination aus Gel und Silikonfolien aus ELASTOSIL® 3003/10 nachfolgend genannt "Prüfkörper-Dehnung 3003/10"

Nr. 3     Kombination aus Gel und Silikonfolien aus ELASTOSIL® 3003/40 nachfolgend genannt "Prüfkörper-Dehnung 3003/40"

## 1. Dehnungstest

Die Dehnungstests wurden an speziell hierfür gefertigten Prüfkörpern (Dehnungsprüfkörpern) vorgenommen. Das Verhalten der Dehnungsprüfkörper unter Zugbelastung wurde überprüft. Hierfür wurden die Prüfkörper in eine Universalprüfmaschine (Firma Test) eingespannt.

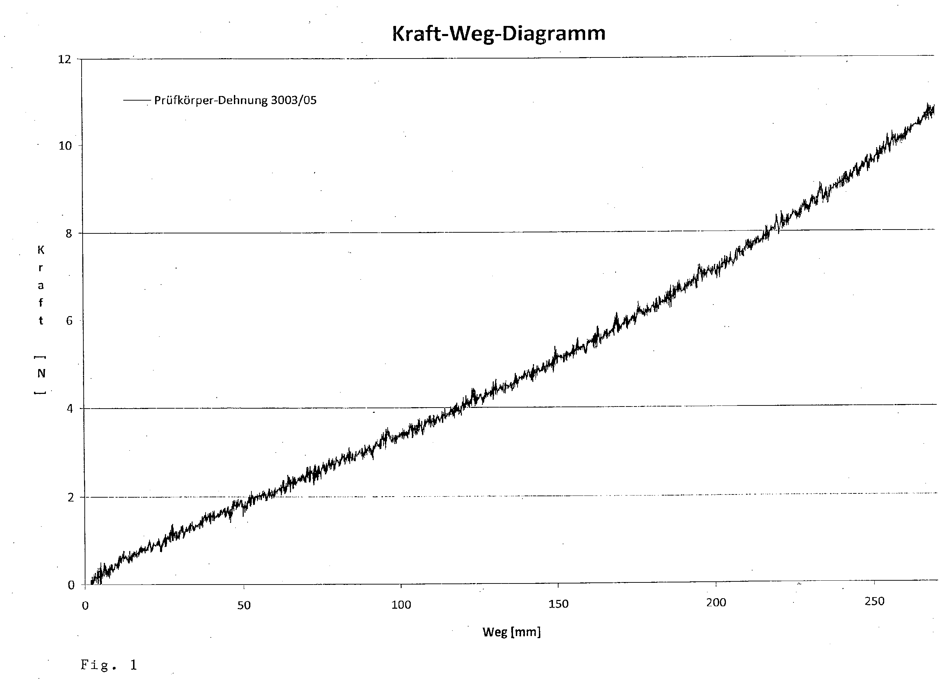

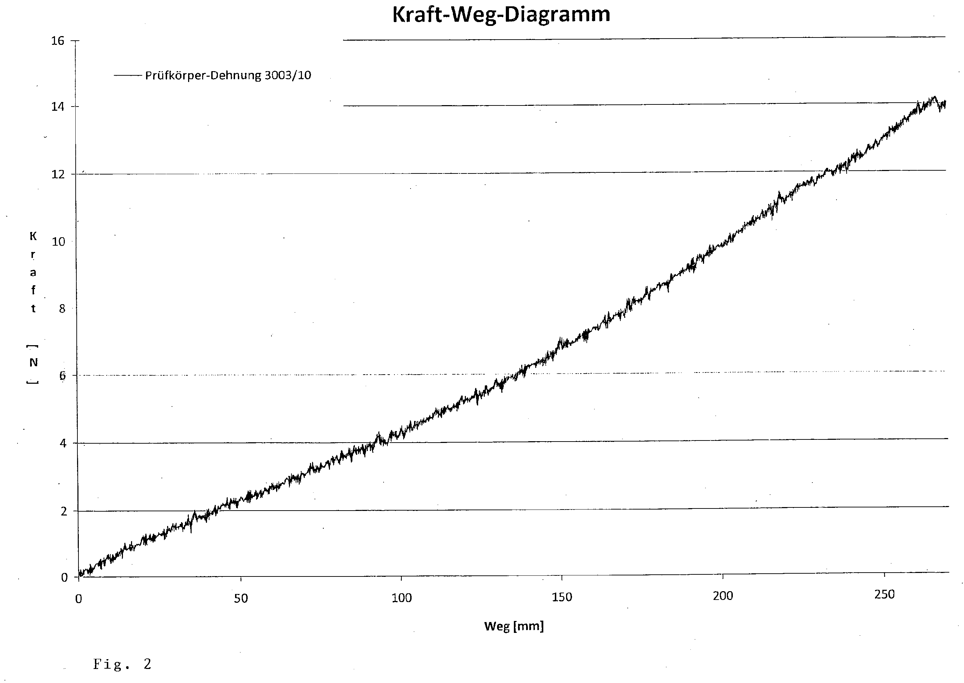

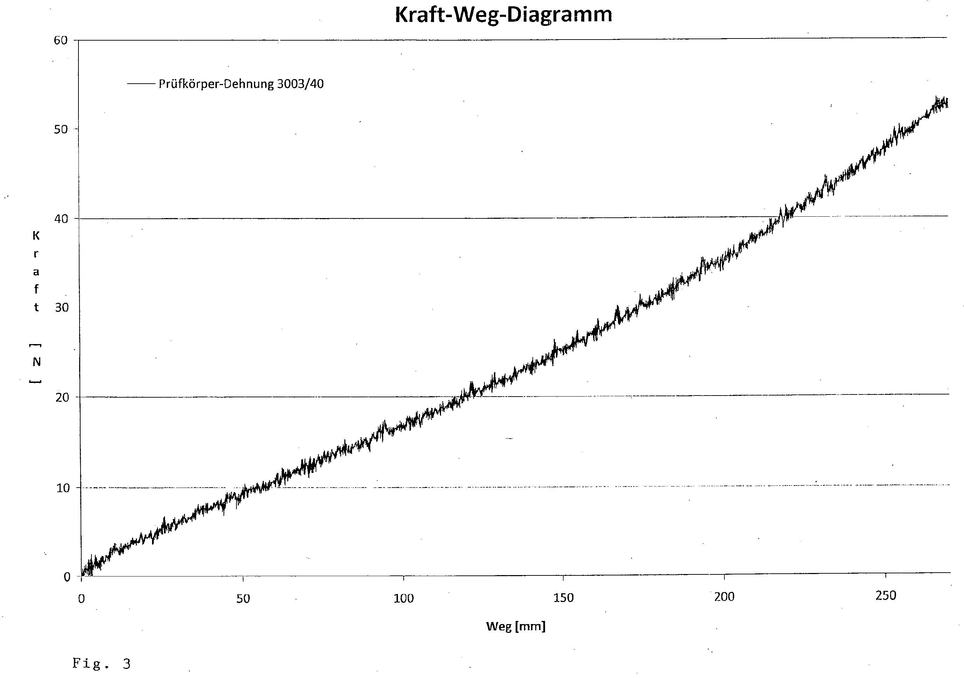

Der Backenabstand der Prüfmaschine betrug 90 mm. Anschließend wurde das Muster auf eine Länge von 360 mm gedehnt, d. h. der Verfahrweg betrug 270 mm und es erfolgte eine Dehnung um 300 %. Der Vorschub betrug hierbei 150 mm pro Minute, die Haltezeit bei 300 %iger Dehnung betrug 15 Sekunden, die Rücklaufgeschwindigkeit betrug 300 mm pro Minute. Bei diesem Vorgang wurde die notwendige Auslenkungskraft über dem Dehnungsweg ermittelt und aufgezeichnet. Die zugehörigen Diagramme sind Fig. 1 bis 3 zu entnehmen. Während des Dehnungsvorgangs wurde das Verhalten des Prüfkörpers beobachtet, insbesondere der Phasenübergang Gel zu Silikonhaut. Die Prüfkörper-Dehnung wurde nach dem Zugversuch nochmals auf mögliche Phasentrennungen untersucht. Die Längenveränderung der Dehnungsprüfkörper wurde gemessen.

Auswertung der Dehnungs-Tests:

An allen Prüfkörpern zeigt sich eine lineare Abhängigkeit der Auslenkungskraft über dem Dehnungsweg (Fig. 1-3). Unter Einbeziehung der Querschnittsfläche der Prüfkörper können die E-Moduln abgeleitet werden.

## 2. E-Moduln (Spannungswert [N/mm$^2$] bei 300 % Dehnung)

Folgende E-Moduln wurden aus den Dehnungstests ermittelt:

-   Prüfkörper-Dehnung 3003/05 = 0,011 N/ mm$^2$ = 11 kPa
-   Prüfkörper-Dehnung 3003/10 = 0,014 N/ mm$^2$ = 14 kPa
-   Prüfkörper-Dehnung 3003/40 = 0,054 N/ mm$^2$ = 54 kPa

Es konnte praktisch keine plastische Verformung der Prüfkörper festgestellt werden. Alle Dehnungsprüfkörper kehrten nach Belastungsende in ihre Ausgangsgeometrie zurück. Eine nachhaltige Längenänderung wurde nicht festgestellt. Die ermittelten sehr niedrigen E-Moduln kennzeichnen die enorme Weichheit des Gesamtsystems Gel-Silikon.

Eine Trennung von Gel und Silikonfolie unter Zugbelastung wurde nicht beobachtet. Alle Prüfkörper wiesen während des Zugversuchs und nach Belastungsende keine optischen Veränderungen auf.

Prüfparameter:

-   Spannzangenabstand 90 mm, lichte Weite
-   Vorschub 150 mm/min bis Länge maximal 270 mm (300 % Ausdehnung bezogen auf die Prüflänge)
-   Haltezeit maximal 15 Sekunden
-   Rücklauf 300 mm/min.

## 3. Druckverformungsrest

Für die Bestimmung des Druckverformungsrests (DVR) wurden insgesamt vier Prüfkörper hergestellt, zwei Gelkörper ohne Beschichtung und zwei Gelkörper mit einer Silikonfolien-Beschichtung.

Zur Darstellung der Gelkörper ohne Beschichtung wurde das Gel vor dem vollständigen Auspolymerisieren in eine Polyethylen-Form gegossen und auspolymerisiert. So entstand ein quaderförmiger Gelkörper mit den Abmaßen Länge = 50 mm, Breite = 50 mm und Höhe = 25 mm, welcher aus der Polyethylen-Form entnommen werden konnte.

Zur Darstellung der Gelkörper mit Beschichtung wurde das Gel in eine vorgefertigte Silikonfolie gegossen. Der so entstandene Gelkörper war nach dem Auspolymerisieren an fünf von sechs Seiten mit einer Silikonfolie beschichtet. Dieser quaderförmige Gelkörper hatte die Abmaße Länge = 50 mm, Breite 50 mm und Höhe gleich 25 mm. Die einzelne nicht beschichtete Fläche hatte die Seitenlängen 50 mm x 50 mm.

Für DVR-Prüfkörper verwendetes Gel:

Polyadditionsprodukt aus einem trifunktionellen Polyetherpolyol mit einer OH-Zahl von 30, mit einer Viskosität von 1000 mPas und einem tetrafunktionellen HDI-Prepolymer mit einem NCO-Gehalt von 6 Gew.%, mit einer Viskosität von 3000 mPas.

Die resultierende Shore-(000)-Härte des Gels betrug 8.

Für die DVR-Prüfkörper verwendete Silikonfolie:

Verwendet wurden vorgefertigte Silkonfolien aus ELASTOSIL® 3003/10 mit einer Härte Shore A 10 der WACKER Chemie AG. Hierfür wurden 0,2 bis 0,3 mm dicke Silikonfolien gegossen, welche gefüllt einen quaderförmigen Körper mit den Seitenlängen 50 mm, 50 mm und 25 mm ergaben. Die Silikonfolie bildete hierbei fünf Flächen eines Quaders ab. Die nicht abgebildete Fläche hatte die Seitenlängen 50 mm und 50 mm.

Mit den vorstehend genannten Materialien (Gel, Silikon) hergestellte DVR-Prüfkörper:

A Gelkörper 50 x 50 x 25 mm (LxBxH) ohne Beschichtung nachfolgend genannt "Prüfkörper A"

B Gelkörper 50 x 50 x 25 mm (LxBxH) mit fünfseitiger Silikonfolien-Beschichtung nachfolgend genannt "Prüfkörper B"

Es wurden jeweils zwei Muster von Prüfkörpern A und B hergestellt, bezeichnet als A1, A2, B1, B2.

DVR-Test:

Der Druckverformungsrest der vier Prüfkörper wurde bestimmt. Hierfür wurden Messungen und Auswertungen in Anlehnung an DIN EN ISO 1856:2008-01 durchgeführt. Die Bedingungen der ISO-Norm, Kap. 7.2 und 7.3, werden dabei erfüllt.

Alle Prüfkörper A und B wurden jeweils zwischen zwei Stahlplatten auf 50 % der ursprünglichen Höhe, also auf 12,5 mm, gestaucht. Jeweils einer der Prüfkörper A und B wurde bei 25°C, die anderen beiden bei 70°C für 22 Stunden gestaucht. Anschließend wurde nach 30 Minuten, 7 Stunden und 72 Stunden Wartezeit die Höhe aller vier Prüfkörper bestimmt. Siehe nachfolgende Tabellen.

| A1: Prüfkörper A - 25°C | | A2: Prüfkörper A - 70°C | |
|---|---|---|---|
| DVR [%] - nach 30 min | DVR = 6 | DVR [%] - nach 30 min | DVR = 13 |
| DVR [%] - nach 7 h | DVR = 6 | DVR [%] - nach 7 h | DVR = 12 |
| DVR [%] - nach 72 h | DVR = 5 | DVR [%] - nach 72 h | DVR = 9 |
| B1: Prüfkörper B - 25°C | | B2: Prüfkörper B - 70°C | |
| DVR [%] - nach 30 min | DVR = 5 | DVR [%] - nach 30 min | DVR = 5 |
| DVR [%] - nach 7 h | DVR = 3 | DVR [%] - nach 7 h | DVR = 5 |
| DVR [%] - nach 72 h | DVR = 1 | DVR [%] - nach 72 h | DVR = 4 |

Die Berechnung des DVR erfolge nach der Formel:

$$DVR = (d_0 - d_r)/d_0 \times 100$$

do = ursprüngliche Dicke des Probekörpers
dr = Dicke des Probekörpers nach der Erholung

Auswertung DVR-Test:

Überraschenderweise hat sich herausgestellt, dass das ohnehin schon sehr gute Rückstellverhalten des Gels durch die Silikonhülle noch verbessert wird. Der Druckverformungsrest der Prüfkörper B ist stets besser als der Druckverformungsrest der Prüfkörper A.

**Beschreibung der Kissenausführungsbeispiele**

Figur 4 zeigt ein Stirnpolster für eine Maske. Der kissenartige Formkörper 1 besteht aus einer vollständig umhüllten Füllung 2, die vollflächigen Kontakt zu den sie umhüllenden Elementen besitzt. Diese bestehen aus der eigentlichen Hüllschicht 3 aus weichem Silikon, den daran angeformten Befestigungselementen 34 und dem Stopfen 32, der die Öffnung 30 verschließt. Mit den Befestigungselementen 34 wird das Stirnpolster an einer hier nicht dargestellten Maske festgemacht. Durch seine gute Dehnbarkeit und Beweglichkeit sowie Kompressionsfähigkeit bietet das Stirnpolster einen hohen Tragekomfort. Füllung 2 und Hüllschicht 3 verhalten sich vollkommen einheitlich. Zu keinem Zeitpunkt und bei keiner Belastung schlägt die Hüllschicht Falten oder Wellen.

Figur 5 zeigt ein weiteres Anwendungsbeispiel für den kissenartigen Formkörper 1 als Dichtung an einer Atemmaske 100. Figur 5 a) zeigt eine perspektivische Ansicht der Dichtung aus dem Formkörper 1, der aus einem weichen elastischen Polyurethan-Gelkörper 2 und einer diesen vollständig umgebenden weichen Silikon-Hüllschicht 3 besteht. Die Hüllschicht 3 ist mit einem Verguss 33 geschlossen. Figur 5b) zeigt eine schematische Querschnittsansicht des Formkörpers 1 aus Figur 5a), geschnitten an Position A-A. In Figur 5c) sitzt der als Dichtung zum Gesicht des Benutzers fungierende kissenartige Formkörper 1 stabil auf einer Atemmaskenschale 4 mit Gasaustauschansatz 5, beides aus Hartkunststoff, auf. Das Dichtungskissen 1 ist als umlaufende Lippe auf dem Rand der Atemmaskenschale 4 ausgebildet. In keiner Dehnungs- oder Kompressionsposition löst sich die Hüllschicht 3 von der Füllung 2; beide bewegen sich völlig konform. Auch bei plötzlichen Formänderungen - wenn bspw. die Atemmaske 100 schnell auf das Gesicht des Benutzers gedrückt werden muss - können keine Falten oder Hohlräume zwischen Füllung 2 und Hüllschicht 3 entstehen.

Figur 6 zeigt ein im Ganzen mit 101 bezeichnetes Lordosepolster. Dies besteht zum wesentlichen Teil aus dem kissenartigen Formkörper 1, der das eigentliche Polster bildet. Dieser besteht wiederum aus der Polyurethangelfüllung 2 in einer Silikonhüllschicht 3, die die Füllung 2 hier nur teilweise umgibt. Das Lordosepolster 101 wird einseitig durch eine Hartkomponente 6 verschlossen, die eine Stützfunktion einbringt. Die Hartkomponente 6 ist aus Hartkunststoff gebildet. Im Gegensatz zu Figur 4, wo eine von der Silikonhülle 3 praktisch vollständig umschlossene Füllung 2 gezeigt wurde, besitzt hier die Hüllschicht 3 eine große Öffnung, die mit Hilfe der Hartkomponente 6 verschlossen wird. Die Fläche 7 der Füllung grenzt direkt an die Hartkomponente 6, sodass die Füllung 2 insgesamt durch die Hüllschicht 3 und die demgegenüber als Basis oder Abdeckung fungierende Hartkomponente 6 vollständig umschlossen ist. Die Komponente 6 und die Hüllschicht 3 bilden zusammen die unmittelbar mit dem elastischen Füllungsmaterial in Kontakt stehende Umhüllung der Füllung 2. Es entsteht ein flaches Kissen, das auf der einen Kissenseite, die vom Körper eines Benutzers abgewandt ist, sehr steif ausgebildet ist.

Figur 7 zeigt ein Kissen 102 in Form eines Kopfkissens mit Nackenstütze. Das Kissen ist wiederum schematisch im Querschnitt gezeigt. Die Füllung aus einem weichen elastischen Polyurethangel 2 ist vollständig von einer Hüllschicht 3 aus Silikon umgeben. Bei einem solchen Kissen ist die Füllung 2 relativ dick. Beanspruchungen des Füllungsmaterials und der Hülle 3 können durch Druckbelastung, durch Dehnung, aber auch durch Verwindung oder Falten des Kissens entstehen. Auch bei starken Beanspruchungen dieser Art erfährt das Kissen keine dauerhafte Veränderung. Für die Herstellung eines solches Kissens 102 kann entweder ein formstabiler Gelkörper hergestellt und mit dem Silikon für die Hülle 3 vollständig umgossen oder besprüht werden, oder es wird zuerst die Hülle 3 hergestellt, die dann eine in der Figur nicht dargestellte Öffnung besitzt und mit dem Gel für die Füllung 2 nachträglich befüllt wird. Die Silikonhülle 3 kann anschließend mit einem Silikonverguss verschlossen werden.

Figur 8 zeigt einen Fahrradsattel 103, bei dem das Sattelpolster aus dem kissenartigen Formkörper 1 besteht, der sich wiederum aus Gelfüllung 2 und Silikonhülle 3 zusammensetzt. Die Silikon-Hüllschicht 3 umgibt die elastische Polyurethanfüllung 2 vollständig. Der Polsterkörper aus dem Formkörper 1 wird von einem Träger 8 abgestützt, der in üblicher Weise mit mechanischen Hilfsmitteln über eine ggf. zusätzlich gefederte Sattelstütze auf einer Sattelstange befestigt werden kann.

Figur 9 zeigt den Querschnitt einer Kopfstütze, wie sie für einen Kraftfahrzeugsitz, einen Bürostuhl, einen Sessel, einen Rollstuhl o. dgl. vorgesehen sein kann. Die Kopfstütze 104, besteht aus dem kissenartigen Formkörper 1 mit gezeigtem Querschnitt und ist entweder an einer hier nicht näher dargestellten Halterung befestigt oder auf ein zusätzliches Kopfstützenteil (nicht dargestellt) aufgeklebt.

Figur 10 zeigt einen Griff 112 aus dem kissenartigen Formkörper 1, der am Ende einer harten formstabilen Griffhalterung 9 befestigt ist. Die Griffhalterung 9 ragt in den Formkörper 1 hinein und wird von der Hüllschicht 3 umschlossen. Die Füllung 2 füllt dabei die Umhüllung aus Griffhalterung 9 und Hüllschicht 3 so aus, dass das Halterungsende vollständig von der polsternden Füllung 2 umkleidet ist.

Figur 11 zeigt eine Armauflage 105, bei der der Formkörper 1 auf einem flachen starren Träger 8 gebildet ist, indem die Füllung 2 durch diesen Träger 8 einerseits und die Hülle 3 andererseits vollständig eingeschlossen ist. Der Träger 8 sitzt auf einer verstellbaren Stütze 10 auf, beispielsweise einer Armstütze für einen Bürostuhl.

Figuren 12 und 13 zeigen Erotikartikel 111. Figur 12 besitzt einen stabförmig gestreckten kissenartigen Formkörper 1, der in diesem Beispiel vollständig von der Silikonhüllschicht 3 umgeben ist. Der Formkörper 1 ist über die Hüllschicht 3 an einem Sockelteil 11 befestigt. Der Erotikartikel 111 nach Figur 13 besitzt demgegenüber eine im Wesentlichen formstabile Außenhülle 12, die die Form des kissenartigen Formkörpers 1 im Inneren dieser Hülle 12 stabilisiert.

Figur 14 zeigt eine Matratze 110, wiederum in schematischer Querschnittsansicht, bei der der kissenartige Formkörper 1 als eine flache Auflage auf einem Matratzenschaumstoffkörper 13 ausgebildet ist. Der Formkörper ist auf einer der Oberflächen des Schaumstoffkörpers 13 eingelassen und schließt so mit der Oberfläche der Matratze 110 bündig ab.

Figur 15 zeigt einen keilförmigen Schwingungsdämpfer 106, der zwischen zwei Hartkomponenten 6a und 6b angeordnet ist, um die durch Pfeile angedeuteten Schwingungen der Hartkomponente 6a zu dämpfen.

Figur 16 zeigt eine Stuhlpolsterung bestehend aus einem Stuhlsitzpolster 107 und einem Rücklehnenpolster 108. Besonders an der Stuhlvorderkante kann es hierzu starken Dehnungen kommen, die jedoch das Sitzkissen 107 nicht aus der Form bringen können. Trotz seiner Weichheit und Elastizität ist der kissenartige Formkörper des Sitzpolsters 107 und des Rückenlehnenpolsters 108 in jedem Falle formstabil und beliebig formbar, sodass sich beispielsweise die in der Figur dargestellte Kontur des Lehnenpolsters 108 immer wieder einstellt.

Figur 17 zeigt eine schematische Skizze einer ringförmigen Dichtung, und zwar in Figur 17a in unbelasteter Stellung und in Figur 17b in dichtender Position, hier um ein Kabel. Die Dichtung besteht ausschließlich aus dem hier ringförmig ausgebildeten kissenartigen Formkörper 1, bei dem die Silikonhüllschicht 3 das Polyurethangel der Füllung 2 vollständig umschließt. Das Dichtungskissen 109 ist im unbelasteten Zustand 16a zur Ringmitte gewölbt und drückt sich beim Dichten zu einem flachen Ring zusammen. Durch die große Beweglichkeit von Füllung und Hülle können keine Undichtigkeiten entstehen. Das Dichtkissen 109 folgt der Kontur des Kabels an jedem Punkt.

Aus der vorstehenden Beschreibung sollen die vielfältigen Verwendungsmöglichkeiten für die erfindungsgemäßen kissenförmigen Formkörper deutlich werden. Es ließen sich zahlreiche andere Anwendungen beschreiben, bei denen der Formkörper als Dichtungspolster, Formausgleichsmaterial u. dgl. zum Einsatz kommen kann.

Bezugszeichenliste:

| | |
|---|---|
| 1 | kissenartiger Formkörper |
| 2 | Füllung aus Gel |
| 3 | Hüllschicht aus Silikon |
| 4 | Atemmaskenschale |
| 5 | Gasaustauschansatz einer Atemmaske |
| 6 | Hartkomponente |
| 7 | Fläche |
| 8 | Träger |
| 9 | Griffhalter |
| 10 | Stütze |
| 11 | Sockelteil |
| 12 | Außenhülle |
| 13 | Matratzenschaumstoffkörper |
| 30 | Öffnung in der Silikonhülle |
| 32 | Stopfen |
| 33 | Verguss |
| 34 | Befestigungselemente |
| 100 | Atemmaske |
| 101 | Lordosepolster |
| 102 | Kissen |
| 103 | Fahrradsattel |
| 104 | Kopfstütze |
| 105 | Armauflage |
| 106 | Schwingungsdämpfer |
| 107 | Stuhlsitzpolster |
| 108 | Rückenlehnenpolster |
| 109 | Dichtung |
| 110 | Matratze |
| 111 | Erotikartikel |
| 112 | Griff |

**Patentansprüche**

1. Kissenartiger Formkörper (1), der eine elastische, gelartige Füllung (2) in einer Umhüllung umfasst, **dadurch gekennzeichnet, dass** die Füllung (2) aus einem Polyurethan mit einer Shore-(000)-Härte, die kleiner oder gleich 80 ist, und einem Druckverformungsrest kleiner oder gleich 14% (DIN EN ISO 1856:2008-01) besteht und dass die Umhüllung ganz oder teilweise aus weichem Silikon mit einer Schichtdicke von 0,075 mm bis 1 mm und mit einer Shore-(A)-Härte zwischen 3A und 45A besteht, wobei das Polyurethan der Füllung (2) adhäsiv ist und das weiche Silikon eine vollflächig in unmittelbarem Kontakt zur Füllung (2) stehende Hüllschicht (3) bildet und der Verbund aus Füllung (2) und Hüllschicht (3) bei Zugdehnung bis zu 250 % längs der Kontaktfläche bei Raumtemperatur ohne bleibende Dehnung in die Ursprungsform zurückkehrt.

2. Kissenartiger Formkörper (1) nach Anspruch 1, **dadurch gekennzeichnet, dass** mehr als 20 % der Umhüllung bezogen auf die Kontaktfläche zur Füllung (2) von der Hüllschicht (3) gebildet werden.

3. Kissenartiger Formkörper (1) nach Anspruch 1 oder 2, **dadurch gekennzeichnet, dass** Teile der Umhüllung durch starre Elemente (6; 8) gebildet werden, an die der kissenförmige Formkörper (1) angeformt ist.

4. Kissenartiger Formkörper (1) nach einem der Ansprüche 1 bis 3, **dadurch gekennzeichnet, dass** das weiche Silikon ein Silikonflüssigkautschuk (LSR - Liquid Silicon Rubber) ist.

5. Kissenartiger Formkörper (1) nach einem der Ansprüche 1 bis 4, **dadurch gekennzeichnet, dass** die Schichtdicke der Hüllschicht (3) 0,1 mm bis 0,9 mm, vorzugsweise 0,1 mm bis 0,4 mm beträgt.

6. Kissenartiger Formkörper (1) nach einem der Ansprüche 1 bis 5, **dadurch gekennzeichnet, dass** die Shore-(A)-Härte der Hüllschicht (3) zwischen 5A und 40A, vorzugsweise zwischen 20A und 40A beträgt.

7. Kissenartiger Formkörper (1) nach einem der Ansprüche 1 bis 6, **dadurch gekennzeichnet, dass** das Polyurethan ein solches mit einem Isocyanatindex kleiner oder gleich 80, vorzugsweise kleiner oder gleich 60 ist.

8. Kissenartiger Formkörper (1) nach einem der Ansprüche 1 bis 7, **dadurch gekennzeichnet, dass** die Umhüllung praktisch vollständig aus der Hüllschicht (3) gebildet ist, wobei die Hüllschicht (3) eine optional mit einem anderen Material als dem weichen Silikon der Hüllschicht verschlossene Öffnung (30) besitzen kann.

9. Kissenartiger Formkörper (1) nach Anspruch 8, **dadurch gekennzeichnet, dass** die Öffnung (30) mit einer Versiegelung oder einem Verschluss (32) verschlossen ist.

10. Verwendung des kissenartigen Formkörpers nach einem der Ansprüche 1 bis 9, für Polster (101; 104; 108), Formausgleichselemente, Griffe (112), Sättel (103), Kissen (102; 107), Erotikartikel (111), Dichtungen (109), Matratzen (110) und Schwingungsdämpfer (106).

11. Bauteil oder Artikel (100), ausgestattet mit einem kissenartigen Formkörper (1) nach einem der Ansprüche 1 bis 9, insbesondere als Polster (101; 104; 108), Dichtung (109), Formausgleichselement, Griff (112), Sattel (103), Kissen (102; 107), Erotikartikel (111), Matratzen (110) und Schwingungsdämpfer (106).

12. Bauteil oder Artikel (100) nach Anspruch 11, **dadurch gekennzeichnet, dass** an die Hülle Befestigungs- oder Halteelemente (34) angeformt, insbesondere angespritzt sind.


**Claims**

1. Cushion-like shaped body (1), which comprises an elastic, gel-like filling (2) in an enclosure, **characterized in that** the filling (2) consists of a polyurethane with a Shore (000) hardness which is less than or equal to 80 and a compression set of less than or equal to 14% (DIN EN ISO 1856:2008-01) and **in that** the enclosure consists entirely or partially of soft silicone with a layer thickness of 0.075 mm to 1 mm and with a Shore (A) hardness of between 3A and 45A, the polyurethane of the filling (2) being adhesive and the soft silicone forming an enclosing layer (3) that is in direct contact over its full surface area with the filling (2) and, with tensile elongation of up to 250% along the contact surface area at room temperature, the composite comprising the filling (2) and the enclosing layer (3) reverting to the original shape without undergoing permanent elongation.

2. Cushion-like shaped body (1) according to Claim 1, **characterized in that** more than 20% of the enclosure with respect to the contact surface area with respect to the filling (2) is formed by the enclosing layer (3).

3. Cushion-like shaped body (1) according to Claim 1 or 2, **characterized in that** parts of the enclosure are formed by rigid elements (6; 8) on which the cushion-like shaped body (1) is integrally formed.

4. Cushion-like shaped body (1) according to one of Claims 1 to 3, **characterized in that** the soft silicone is a liquid silicone rubber (LSR).

5. Cushion-like shaped body (1) according to one of Claims 1 to 4, **characterized in that** the layer thickness of the enclosing layer (3) is 0.1 mm to 0.9 mm, preferably 0.1 mm to 0.4 mm.

6. Cushion-like shaped body (1) according to one of Claims 1 to 5, **characterized in that** the Shore (A) hardness of the enclosing layer (3) is between 5A and 40A, preferably between 20A and 40A.

7. Cushion-like shaped body (1) according to one of Claims 1 to 6, **characterized in that** the polyurethane is such a polyurethane with an isocyanate index of less than or equal to 80, preferably less than or equal to 60.

8. Cushion-like shaped body (1) according to one of Claims 1 to 7, **characterized in that** the enclosure is formed almost completely by the enclosing layer (3), it being possible for the enclosing layer (3) to have an opening (30) that is optionally closed with a material other than the soft silicone of the enclosing layer.

9. Cushion-like shaped body (1) according to Claim 8, **characterized in that** the opening (30) is closed by a sealing or a closure (32).

10. Use of the cushion-like shaped body according to one of Claims 1 to 9, for pads (101; 104; 108), shape-compensating elements, grips (112), saddles (103), cushions (102; 107), erotic articles (111), seals (109), mattresses (110) and vibration dampers (106).

11. Component or article (100), equipped with a cushion-like shaped body (1) according to one of Claims 1 to 9, in particular as a pad (101; 104; 108), seal (109), shape-compensating element, grip (112), saddle (103), cushion (102; 107), erotic article (111), mattress (110) and vibration damper (106).

12. Component or article (100) according to Claim 11, **characterized in that** fastening or holding elements (34) are integrally formed, in particular moulded, on the enclosure.

**Revendications**

1. Corps moulé en forme de cousin (1), qui comprend un remplissage élastique de type gel (2) dans une gaine, **caractérisé en ce que** le remplissage (2) est constitué par un polyuréthane qui a une dureté Shore (000) inférieure ou égale à 80 et une déformation résiduelle par compression inférieure ou égale à 14 % (DIN EN ISO 1856:2008-01), et **en ce que** la gaine est constituée en totalité ou en partie de silicone souple ayant une épaisseur de couche de 0,075 mm à 1 mm et une dureté Shore (A) comprise entre 3A et 45A, le polyuréthane du remplissage (2) étant adhésif et la silicone souple formant une couche de gaine (3) qui est en contact direct sur l'ensemble de sa surface avec le remplissage (2), et le composite du remplissage (2) et de la couche de gaine (3) revenant à sa forme initiale sans allongement rémanent lors d'un allongement par traction de jusqu'à 250 % le long de la surface de contact à température ambiante.

2. Corps moulé en forme de coussin (1) selon la revendication 1, **caractérisé en ce que** plus de 20 % de la gaine par rapport à la surface de contact avec le remplissage (2) est formé par la couche de gaine (3).

3. Corps moulé en forme de coussin (1) selon la revendication 1 ou 2, **caractérisé en ce que** des parties de la gaine sont formées par des éléments rigides (6 ; 8), sur lesquels le corps moulé en forme de coussin (1) est formé.

4. Corps moulé en forme de coussin (1) selon l'une quelconque des revendications 1 à 3, **caractérisé en ce que** la silicone souple est un caoutchouc de silicone liquide (LSR, Liquid Silicon Rubber).

5. Corps moulé en forme de coussin (1) selon l'une quelconque des revendications 1 à 4, **caractérisé en ce que** l'épaisseur de couche de la couche de gaine (3) est de 0,1 mm à 0,9 mm, de préférence de 0,1 mm à 0,4 mm.

6. Corps moulé en forme de coussin (1) selon l'une quelconque des revendications 1 à 5, **caractérisé en ce que** la dureté Shore (A) de la couche de gaine (3) est comprise entre 5A et 40A, de préférence entre 20A et 40A.

7. Corps moulé en forme de coussin (1) selon l'une quelconque des revendications 1 à 6, **caractérisé en ce que** le polyuréthane est un polyuréthane présentant un indice d'isocyanate inférieur ou égal à 80, de préférence inférieur ou égal à 60.

8. Corps moulé en forme de coussin (1) selon l'une quelconque des revendications 1 à 7, **caractérisé en ce que** la gaine est formée pratiquement en totalité par la couche de gaine (3), la couche de gaine (3) pouvant présenter une ouverture (30) éventuellement fermée avec un autre matériau que la silicone souple de la couche de gaine.

9. Corps moulé en forme de coussin (1) selon la revendication 8, **caractérisé en ce que** l'ouverture (30) est fermée avec un scellement ou un bouchon (32).

10. Utilisation du corps moulé en forme de coussin selon l'une quelconque des revendications 1 à 9 pour des rembourrages (101 ; 104 ; 108), des éléments d'égalisation de forme, des poignées (112), des selles (103), des coussins (102 ; 107), des articles érotiques (111), des joints (109), des matelas (110) et des amortisseurs d'oscillations (106).

11. Composant ou article (100), muni d'un corps moulé en forme de coussin (1) selon l'une quelconque des revendications 1 à 9, notamment en tant que rembourrage (101 ; 104 ; 108), joint (109), élément d'égalisation de forme, poignée (112), selle (103), coussin (102 ; 107), article érotique (111), matelas (110) et amortisseur d'oscillations (106).

12. Composant ou article (100) selon la revendication 11, **caractérisé en ce que** des éléments de fixation ou de maintien (34) sont formés, notamment injectés, sur la gaine.

Kraft-Weg-Diagramm

Fig. 1

Kraft-Weg-Diagramm

Fig. 2

# Kraft-Weg-Diagramm

Fig. 3

EP 2 948 500 B1

Fig. 4

a)

33

A

A

1

3

b)

33

1

3

2

c)

5

4

100

1

Fig. 5

Fig. 6

Fig. 7

Fig. 8

Fig. 9

**Fig. 10**

**Fig. 11**

Fig. 12

Fig. 13

Fig. 14

Fig. 15

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20217653 U1
- EP 0396230 B1
- US 2012090197 A1
- US 2009320297 A1
- DE 202010016838 U1
- US 20070221227 A1
- DE 69634431 T2